# EUROPÄISCHE PATENTSCHRIFT

(11) **EP 2 612 555 B1**
(45) Veröffentlichungstag und Bekanntmachung des Hinweises auf die Patenterteilung: **03.05.2017**
(21) Anmeldenummer: 12008600.4
(22) Anmeldetag: 22.12.2012
(51) Int. Cl.: A22C 11/00

(54) **Netzeinziehvorrichtung**
Net pulling device
Dispositif d'enfilage en réseau

(30) Priorität: 07.01.2012 DE 202012000100 U
(43) Veröffentlichungstag der Anmeldung: 10.07.2013
(73) Patentinhaber: HERMANN WIEGAND GMBH, 36169 Rasdorf (DE)
(72) Erfinder: Etzel, Roland, 36169 Rasdorf (DE)
(74) Vertreter: Lelgemann, Karl-Heinz

(56) Entgegenhaltungen:
- EP-A1- 0 198 486
- EP-A1- 1 078 574
- US-A- 5 042 234
- US-A1- 2005 087 075

## Beschreibung

Die Erfindung bezieht sich auf eine Netzeinziehvorrichtung nach dem Oberbegriff des Patentanspruchs 1.

Bei der Bearbeitung und der Verpackung von Fleischstücken soll insbesondere verstärkt in den letzten Jahren auch erhebliches Augenmerk darauf gelegt werden, dass das Fleischstück bis zum letztendlichen Verbrauch in Küchen etc. besser gegen äußere Einflüsse geschützt ist. Daher werden auch mit Netzen versehene Fleischstücke mit Umhüllungen versehen, die diesen Schutzgedanken verwirklichen sollen.

Die EP 1 078 574 A1 offenbart eine Netzeinziehvorrichtung mit einer Füllform, in die ein mit einem es umgebenden Netz zu versehendes Fleischstück bzw. Wurstmasse einlegbar ist und der ein Förderglied in Form einer Schnecke zugeordnet ist, und einem Netzrohr, auf dessen Außenmantelfläche gerafftes Netzmaterial angeordnet ist, dessen füllformferne Austrittöffnung vom Netzmaterial schließbar ist, und durch dessen füllformnahe Eintrittöffnung das in die Füllform eingelegte Fleischstück bzw. die Wurstmasse mittels der füllformseitigen Schnecke in das Netzrohr hinein und durch dieses hindurch zur füllformfernen Austrittöffnung des Netzrohrs bewegbar ist, wo das Fleischstück bzw. die Wurstmasse beim Austritt aus der füllformfernen Austrittöffnung des Netzrohrs mit einem Netz aus dem auf der Außenmantelfläche des Netzrohrs gerafften und dessen füllformferne Austrittöffnung verschließenden Netzmaterial ummantelbar ist, wobei ein Folienrohr, das koaxial innerhalb des Netzrohrs angeordnet ist, auf dessen Außenmantelfläche Collagenfolie angeordnet ist, dessen füllformferne Austrittöffnung von Collagenfolie schließbar ist und durch dessen füllformseitige Eintrittöffnung das in die Füllform eingelegte Fleischstück bzw. die Wurstmasse mittels der füllformseitigen Schnecke in das Folienrohr hinein und durch dieses hindurch zur in oder nahe der füllformfernen Austrittöffnung des Netzrohrs angeordneten füllformfernen Austrittöffnung des Folienrohrs bewegbar ist, wo das Fleischstück bzw. die Wurstmasse beim Austritt aus der füllformfernen Austrittöffnung des Folienrohrs mit einer Umhüllung aus der auf der Außenmantelfläche des Folienrohrs angeordneten und dessen füllformferne Austrittöffnung verschließenden Collagenfolie ummantelbar ist, die zwischen dem Fleischstück bzw. der Wurstmasse und dem das Fleischstück bzw. die Wurstmasse umgebenden Netz angeordnet ist.

Der Erfindung liegt die Aufgabe zugrunde, die eingangs geschilderte Netzeinziehvorrichtung so weiterzubilden, dass mit einem möglichst geringen technisch-konstruktiven Aufwand Collagenfolie an die Außenmantelfläche des Folienrohrs gebracht werden kann, wobei auch das Heranbringen der Collagenfolie an die Außenmantelfläche des Folienrohrs mit einem möglichst geringen technisch-konstruktiven Aufwand realisiert werden soll.

Diese Aufgabe wird erfindungsgemäß durch die im kennzeichnenden Teil des Patentanspruchs 1 angegebenen Merkmale gelöst.

Im Collagenaufsatz können diejenigen Bauteile angeordnet werden, mittels denen die Collagenfolie in eine Lage in Bezug auf die Außenmantelfläche des Folienrohrs verbracht wird, die es zulässt, dass die Außenmantelfläche in demjenigen Bereich des Folienrohrs, mit dem das Folienrohr koaxial innerhalb des Netzrohrs sitzt, quasi oder nahezu vollständig von der Collagenfolie umhüllt wird.

Gemäß einer vorteilhaften Ausführungsform ist das Folienrohr fest mit der Füllform verbunden, wobei es vorzugsweise mit der Füllform verschweißt sein kann.

Zweckmäßigerweise ist der Collagenaufsatz an einer der Füllform zugewandten Außenwand vorzugsweise lösbar, z.B. durch Schraubverbindungen, mit der Füllform verbindbar und weist sowohl an seiner der Füllform zugewandten Außenwand als auch an seiner der Füllform abgewandten Außenwand eine Durchbrechung auf, zwischen denen sich das Folienrohr erstreckt.

Das Netzrohr ist in einfacher Weise mit dem Collagenaufsatz verbindbar bzw. am Collagenaufsatz montierbar, wenn das Netzrohr an seiner dem Collagenaufsatz zugewandten füllformnahen Eintrittöffnung einen Anschlussflansch aufweist, der an der füllformfernen Außenwand des Collagenrohrs anbringbar, vorzugsweise verschraubbar, ist.

Die Umlenkvorrichtung hat vorteilhaft eine Umlenkrolle, die nahe der der Füllform abgewandten Außenwand des Collagenaufsatzes angeordnet ist und Leitmittel aufweist, mittels denen die von der Umlenkrolle umgelenkte Collagenfolie so zur Außenmantelfläche des sich im Collagenaufsatz erstreckenden Abschnitts des Folienrohrs führbar ist, dass die Collagenfolie die Außenmantelfläche dieses Abschnitts des Folienrohrs umhüllt und an der der Füllform abgewandten Außenwand des Collagenaufsatzes in den Ringraum zwischen der Außenmantelfläche des Folienrohrs und der Innenmantelfläche des Netzrohrs eintritt. Hierbei können diese Leitmittel vorteilhaft als Führdrähte ausgestaltet sein, mittels denen die von der Umlenkrolle umgelenkte Collagenfolie nahe der der Füllform zugewandten Außenwand des Collagenaufsatzes an die Außenmantelfläche des Folienrohrs geführt wird.

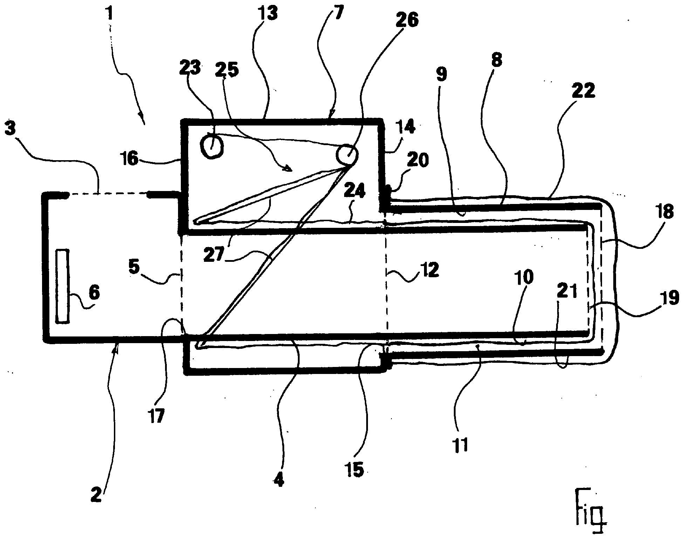

Im Folgenden wird die Erfindung anhand einer Ausführungsform unter Bezugnahme auf die Zeichnung näher erläutert, deren einzige Figur eine Prinzipdarstellung einer Ausführungsform einer erfindungsgemäßen Netzeinziehvorrichtung zeigt.

Eine in der einzigen Figur in einer Ausführungsform gezeigte erfindungsgemäße Netzeinziehvorrichtung 1 dient dazu, in der Figur nicht dargestellte Fleischstücke mit einem Netz und mit einer Collagenfolie zu umhüllen, wobei die Collagenfolie zwischen dem Fleischstück und dem Netz angeordnet werden soll.

Hierzu hat die Netzeinziehvorrichtung 1 in der in der Figur gezeigten Ausführungsform eine Füllform 2. In die Füllform 2 ist durch eine Öffnung 3 derselben ein Fleischstück einbringbar.

In der dargestellten Ausführungsform ist mit der Füllform 2 ein Folienrohr 4 kombiniert. Das Folienrohr 4 ist fest mit der Füllform 2 verbunden, wobei das Folienrohr 4 eine füllformseitige Eintrittsöffnung 5 aufweist, durch die hindurch ein in der Füllform 2 befindliches Fleischstück mittels eines Förderglieds 6, das in der Füllform 2 angeordnet ist, aus der Füllform in das Folienrohr 4 hinein verschiebbar ist.

Das Folienrohr 4 kann beispielsweise an die Füllform 2 angeschweißt sein. An seinem füllformnahen Abschnitt durchläuft das Folienrohr 4 einen Collagenaufsatz 7. An seinem über den Collagenaufsatz 7 vorstehenden Abschnitt ist das Folienrohr 4 von einem Netzrohr 8 umgeben, das im dargestellten Ausführungsbeispiel koaxial zum Folienrohr 4 angeordnet ist und einen etwas größeren Durchmesser aufweist als das Folienrohr 4, so dass zwischen einer Innenmantelfläche 9 des Netzrohrs 8 und einer Außenmantelfläche 10 des Folienrohrs 4 ein Ringraum 11 ausgebildet ist.

Eine füllformnahe Eintrittsöffnung 12 des Netzrohrs 8 umgibt das Folienrohr 4 und öffnet sich in den Innenraum eines Grundgehäuses 13 des Collagenaufsatzes 7, wobei das Grundgehäuse 13 des Collagenaufsatzes 7 in seiner der Füllform abgewandten Außenwand 14 hierzu eine Durchbrechung 15 aufweist. An seiner der Füllform 2 zugewandten Außenwand 16 hat das Grundgehäuse 13 des Collagenaufsatzes 7 eine weitere Durchbrechung 17, durch die hindurch das Folienrohr 4 in das Grundgehäuse 13 des Collagenaufsatzes 7 eintritt. Die beiden Durchbrechungen 15, 17 sind somit miteinander fluchtend angeordnet, wobei die Durchbrechung 15 in der der Füllform 2 abgewandten Außenwand 14 des Grundgehäuses 13 einen etwas größeren Durchmesser aufweist als die in der der Füllform 2 zugewandten Außenwand 16 ausgebildete weitere Durchbrechung 17.

Wie bereits erwähnt, erstrecken sich das Folienrohr 4 und das Netzrohr 8 von der Füllform 2 abgewandten Außenwand 14 des Grundgehäuses 13 des Collagenaufsatzes 7 bis zu ihren jeweiligen füllformfernen Austrittöffnungen 18, 19, wobei die füllformferne Austrittöffnung 18 des Netzrohrs 8 im dargestellten Ausführungsbeispiel etwas weiter von der genannten Außenwand 14 entfernt ist als die füllformferne Austrittöffnung 19 des Folienrohrs 4.

Das Netzrohr 8 ist mittels eines Anschlussflanschs 20 mit der der Füllform 2 abgewandten Außenwand 14 des Grundgehäuses 13 des Collagenaufsatzes 7 verbunden, beispielsweise verschraubt.

Auf der Außenmantelfläche 21 des Netzrohrs 8 wird Netzmaterial 22 in geraffter Form aufgebracht. Dieses Netzmaterial 22 umgibt die Außenmantelfläche 21 des Netzrohrs 8 und verschließt die füllformferne Austrittöffnung 18 des Netzrohrs 8. Die Aufbringung des Netzmaterials 22 auf die Außenmantelfläche 21 des Netzrohrs 8 erfolgt in dafür vorgesehenen gerätetechnischen Einrichtungen maschinell.

Im Collagenaufsatz 7 bzw. in dessen Grundgehäuse 13 ist eine Collagenfolienrolle 23 angeordnet, von der Collagenfolie 24 abrollbar ist. Diese Collagenfolie 24 wird von der Collagenfolienrolle 23 zu einer Umlenkvorrichtung 25 geführt, zu der eine Umlenkrolle 26 und Leitmittel 27 gehören.

Von der Collagenfolienrolle gerät die Collagenfolie 24 zunächst zur Umlenkrolle 26, wird von dieser umgelenkt und an die Leitmittel 27 gebracht. Mittels der Leitmittel 27 wird die Collagenfolie 24 so an die Außenmantelfläche 10 des Folienrohrs 4 geführt, dass die Collagenfolie 24 die Außenmantelfläche 10 des Folienrohrs 4 umhüllt und an der der Füllform 2 abgewandten Außenwand 14 des Grundgehäuses 13 des Collagenaufsatzes 7 durch die füllformnahe Eintrittsöffnung 12 des Netzrohrs 8 in den Ringraum 11 zwischen der Innenmantelfläche 9 des Netzrohrs 8 und der Außenmantelfläche 10 des Folienrohrs 4 eintritt. Die füllformferne Austrittöffnung 19 des Folienrohrs 4 ist mittels der Collagenfolie 24 verschlossen.

Wenn ein Fleischstück durch den Innenraum des Folienrohrs 4 geschoben wird, erreicht es letztendlich die füllformferne Austrittöffnung 19 des Folienrohrs 4. Die weitere Verschiebung des Fleischstücks führt dazu, dass das Fleischstück beim Austreten aus der füllformfernen Austrittöffnung 19 des Folienrohrs 4 von der dort befindlichen Collagenfolie 24 umgeben wird. Tritt das von der Collagenfolie 24 umhüllte Fleischstück dann aus der füllformfernen Austrittöffnung 18 des Netzrohrs 8 aus, wird es des Weiteren vom auf der Außenmantelfläche 21 befindlichen und die füllformferne Austrittöffnung 18 des Netzrohrs 8 schließenden Netzmaterial 22 umgeben. Sobald das von der Collagenfolie 24 und vom Netzmaterial 22 umhüllte Fleischstück insgesamt durch die füllformferne Austrittöffnung 18 des Netzrohrs 8 hindurchgeschoben ist, wird sowohl das Netzmaterial 22 als auch die Collagenfolie 24 zwischen der füllformfernen Austrittöffnung 18 des Netzrohrs 8 und dem von Netzmaterial 22 und der Collagenfolie 24 umhüllten Fleischstück so durchtrennt, dass sowohl die Collagenfolie 24 als auch das Netzmaterial 22 einerseits das Fleischstück einschließen und andererseits die füllformferne Austrittöffnung 18 des Netzrohrs 8 bzw. die füllformferne Austrittöffnung 19 des Folienrohrs 4 wieder verschließen. Dieser Vorgang wiederholt sich, solange Netzmaterial 22 auf der Außenmantelfläche 21 des Netzrohrs 8 bzw. solange Collagenfolie 24 auf der Außenmantelfläche 10 des Folienrohrs 4 vorhanden ist.

Mit der vorstehend geschilderten Netzeinziehvorrichtung 1 können Fleischstücke maschinell und mit einem vergleichsweise geringen Aufwand mit einer inneren Umhüllung aus Collagenfolie 24 und einer äußeren Umhüllung aus Netzmaterial 22 versehen werden.

## Patentansprüche

1. Netzeinziehvorrichtung, mit einer Füllform (2), in die ein mit einem es umgebenden Netz zu versehendes Fleischstück einlegbar ist und der ein Förderglied (6) zugeordnet ist, einem Netzrohr (8), auf dessen Außenmantelfläche (21) gerafftes Netzmaterial (22) angeordnet ist, dessen füllformferne Austrittöffnung (18) vom Netzmaterial (22) schließbar ist, und durch dessen füllformnahe Eintrittöffnung (12) das in die Füllform (2) eingelegte Fleischstück mittels des füllformseitigen Förderglieds (6) in das Netzrohr (8) hinein und durch dieses hindurch zur füllformfernen Austrittöffnung (18) des Netzrohrs (8) bewegbar ist, wo das Fleischstück beim Austritt aus der füllformfernen Austrittöffnung (18) des Netzrohrs (8) mit einem Netz aus dem auf der Außenmantelfläche (21) des Netzrohrs (8) gerafften und dessen füllformferne Austrittöffnung (18) verschließenden Netzmaterial (22) ummantelbar ist, und einem Folienrohr (4), das koaxial innerhalb des Netzrohrs (8) angeordnet ist, auf dessen Außenmantelfläche (10) Collagenfolie (24) angeordnet ist, dessen füllformferne Austrittöffnung (19) von Collagenfolie (24) schließbar ist und durch dessen füllformseitige Eintrittöffnung (5) das in die Füllform (2) eingelegte Fleischstück mittels des füllformseitigen Förderglieds (6) in das Folienrohr (4) hinein und durch dieses hindurch zur in oder nahe der füllformfernen Austrittöffnung (18) des Netzrohrs (8) angeordneten füllformfernen Austrittöffnung (19) des Folienrohrs (4) bewegbar ist, wo das Fleischstück beim Austritt aus der füllformfernen Austrittöffnung (19) des Folienrohrs (4) mit einer Umhüllung aus der auf der Außenmantelfläche (10) des Folienrohrs (4) angeordneten und dessen füllformferne Austrittöffnung (19) verschließenden Collagenfolie (24) ummantelbar ist, die zwischen dem Fleischstück und dem das Fleischstück umgebenden Netz angeordnet ist, **gekennzeichnet durch** einen Collagenaufsatz (7), der zwischen der Füllform (2) und der füllformnahen Eintrittöffnung (12) des Netzrohrs (8) angeordnet ist, **durch** den hindurch sich das Folienrohr (4) erstreckt, an dessen der Füllform (2) abgewandten Außenseite die füllformnahe Eintrittöffnung (12) des Netzrohrs (8) angeordnet ist, und in bzw. an dem eine Collagenfolienrolle (23), von der die Collagenfolie (24) abrollbar ist, und eine Umlenkvorrichtung (25) angeordnet sind, mittels der die von der Collagenfolienrolle (23) abgerollte Collagenfolie (24) so in einen Ringraum (11) zwischen der Außenmantelfläche (10) des Folienrohrs (4) und der Innenmantelfläche (9) des Netzrohrs (8) einführbar ist, dass das Folienrohr (4) auf seiner Außenmantelfläche (10) vollständig von der Collagenfolie (24) umhüllbar ist.

2. Netzeinziehvorrichtung nach Anspruch 1, bei der das Folienrohr (4) fest mit der Füllform (2) verbunden, vorzugsweise verschweißt, ist.

3. Netzeinziehvorrichtung nach Anspruch 1 oder 2, bei der der Collagenaufsatz (7) an einer der Füllform (2) zugewandten Außenwand (16) lösbar, z.B. durch Schraubverbindungen, mit der Füllform (2) verbindbar ist und sowohl an seiner der Füllform (2) zugewandten Außenwand (16) als auch an seiner der Füllform (2) abgewandten Außenwand (14) eine Durchbrechung (17, 15) aufweist, zwischen denen sich das Folienrohr (4) erstreckt.

4. Netzeinziehvorrichtung nach einem der Ansprüche 1 bis 3, bei der das Netzrohr (8) an seiner dem Collagenaufsatz (7) zugewandten füllformnahen Eintrittöffnung (12) einen Anschlussflansch (20) aufweist, der an der füllformfernen Außenwand (14) des Collagenaufsatzes (7) anbringbar, vorzugsweise verschraubbar, ist.

5. Netzeinziehvorrichtung nach einem der Ansprüche 1 bis 4, bei der die Umlenkvorrichtung (25) eine Umlenkrolle (26), die nahe der der Füllform (2) abgewandten Außenwand (14) des Collagenaufsatzes (7) angeordnet ist, und Leitmittel (27) aufweist, mittels denen die von der Umlenkrolle (26) umgelenkte Collagenfolie (24) so zur Außenmantelfläche (10) des sich im Collagenaufsatz (7) erstreckenden Abschnitts des Folienrohrs (4) fixierbar ist, dass die Collagenfolien (24) die Außenmantelfläche (10) dieses Abschnitts des Folienrohrs (4) umhüllt und an der der Füllform (2) abgewandten Außenwand (14) des Collagenaufsatzes (7) in den Ringraum (11) zwischen der Außenmantelfläche (10) des Folienrohrs (4) und der Innenmantelfläche (9) des Netzrohrs (8) eintritt.

## Claims

1. Net drawing-in device, having a filling form (2), into which a quantity of meat can be placed together with a net in which it is to be wrapped and to which a conveyor member (6) is assigned, with a net tube (8) the outside peripheral surface (21) of which is furnished with pleated net material (22), of which the outlet opening (18) farthest from the filling form can be closed by the net material (22), and of which the inlet opening (12) closest to the filling form allows the quantity of meat placed in the filling form (2) to pass through into the net tube (8) by the action of the conveyor member (6) on the filling form side, said quantity of meat being movable through said net tube until it reaches the outlet opening (18) on the side farthest from the filling form, where the quantity of meat upon exiting the outlet opening (18) of the net tube (8) on the side farthest from the filling form can be encased with a net from the net material (22) which is pleated on the outside peripheral surface (21) of the net tube (8) and which closes off the outlet opening (18) thereof farthest from the filling form, and a with a film tube (4) that is arranged coaxially inside the net tube (8), the outer peripheral surface (10) of which is furnished with a collagen film (24), and of which the outlet opening (19) farthest from the filling form is closable by the collagen film (24), and through whose inlet opening (5) closest to the filling form the quantity of meat placed in the filling form (2) can be moved by the action of the conveyor member (6) on the filling form side into the film tube (4) and through said film tube as far as the outlet opening (19) on the of the film tube (4) on the side farthest from the filling form arranged in or close to the outlet opening (18) of the net tube (8) farthest from the filling form, where the quantity of meat upon exiting the outlet opening (19) of the film tube (4) on the side farthest from the filling form can be encased with a casing from the collagen film (24) which is arranged on the outside peripheral surface (10) of the film tube (4) and which closes the outlet opening (19) thereof farthest from the filling form, which is arranged between the quantity of meat and the net surrounding the quantity of meat, **characterised by** a collagen top piece (7) which is disposed between the filling form (2) and the inlet opening (12) of the net tube (8) closest to the filling form, and through which the film tube (4) extends, on the outside of which facing away from the filling form (2) the inlet opening (12) of the net tube (8) closest to the filling form is disposed, and in or on which a collagen film roll (23) from which the collagen film (24) can be unrolled, and a deflection device (25) are disposed, by means of which the collagen film (24) unrolled from the collagen film roll (23) can be introduced into an encircling space (11) between the outside peripheral surface (10) of the film tube (4) and the inside peripheral surface (9) of the net tube (8) in such manner that the film tube (4) can be completely encased by the collagen film (24) on the outside peripheral surface (10) thereof.

2. Net drawing-in device according to claim 1, in which the film tube (4) is attached permanently, preferably welded, to the filling form (2).

3. Net drawing-in device according to claim 1 or 2, in which the collagen top piece (7) can be attached detachably to the filling form (2) on an outer wall (16) facing the filling form (2), for example by threaded connections, and has a discontinuity (17, 15) both on the outer wall (16) thereof facing the filling form (2) and on the outer wall (14) facing away from the filling form (2), between which the film tube (4) passes.

4. Net drawing-in device according to any one of claims 1 to 3, in which the net tube (8) has a connecting flange (20) on the inlet opening (12) thereof closest to the filling form facing the collagen top piece (7), which can be mounted, preferably screwed onto the outer wall (14) of the collagen top piece (7) farthest from the filling form.

5. Net drawing-in device according to any one of claims 1 to 4, in which the deflection device (25) has a deflection pulley (26) which is arranged close to the outer wall (14) of the collagen top piece (7) facing away from the filling form (2), and guide means (27) by means of which the collagen film (24) which is deflected by the deflection pulley (26) can be fixed on the outside peripheral surface (10) of the portion of the film tube (4) extending in the collagen top piece (7) in such manner that the collagen film (24) encases the outside peripheral surface (10) of said portion of the film tube (4) and enters the encircling space (11) between the outside peripheral surface (10) of the film tube (4) and the inside peripheral surface (9) of the net tube (8) at the outside wall (14) of the collagen top piece (7) facing away from the filling form (2).

## Revendications

1. Dispositif d'enfilage de filet, comportant un moule positif (2) dans lequel on peut poser une pièce de viande qui doit être munie d'un filet qui l'entoure et auquel est associé un organe de convoyage (6), un tube à filet (8) sur la surface d'enveloppe extérieure (21) duquel est placé une matière en filet (22) froncée, dont l'ouverture de sortie (18) éloignée du moule positif peut se fermer par la matière en filet (22) et à travers l'ouverture d'entrée (12) proche du moule positif duquel la pièce de viande posée dans le moule positif (2) peut être déplacée au moyen de l'organe de transport (6) situé du côté du moule positif à l'intérieur du tube à filet (8) et à travers celui-ci vers l'ouverture de sortie (18) éloignée du moule positif du tube à filet (8), où la pièce de viande, à la sortie de l'ouverture de sortie (18) éloignée du moule positif du tube à filet (8) peut être enveloppée d'un filet de la matière en filet (22) froncée sur la surface d'enveloppe extérieure (21) du tube à filet (8) et fermant l'ouverture de sortie (18) éloignée du moule positif de celui-ci et un tube à film (4) qui est placé de manière coaxiale à l'intérieur du tube à filet (8), sur la surface d'enveloppe extérieure (10) duquel est placé un film de collagène (24) dont l'ouverture de sortie (19) éloignée du moule positif peut être fermée par un film de collagène (24) et à travers l'ouverture d'entrée (5) située du côté du moule positif duquel la pièce de viande posée dans le moule positif (2) peut être déplacée au moyen de l'organe de convoyage (6) situé du côté du moule positif à l'intérieur du tube à film (4) et à travers celui-ci vers l'ouverture de sortie (19) éloignée du moule positif du tube à film (4) placé dans ou à proximité de l'ouverture de sortie (18) du tube à filet (8), où la pièce de viande, à la sortie de l'ouverture de sortie (19) éloignée du moule positif du tube à film (4) peut être enveloppée d'une gaine constituée du film de collagène (24) placé sur la surface d'enveloppe extérieure (10) du tube à film (4) et fermant l'ouverture de sortie (19) éloignée du moule positif de celui-ci, qui est placé entre la pièce de viande et le filet entourant la pièce de viande, **caractérisé par** une embouchure à collagène (7) qui est placée entre le moule positif (2) et l'ouverture d'entrée (12) proche du moule positif du tube à filet (8), à travers laquelle s'étend le tube à film (4), sur la face extérieure opposée au moule positif (2) de laquelle est placée l'ouverture d'entrée (12) proche du moule du tube à filet (8) et dans ou sur laquelle sont placés un rouleau (23) à film de collagène, à partir duquel le film de collagène (24) est déroulable et un dispositif de renvoi (25), au moyen duquel la film de collagène (24) déroulé du rouleau (23) de film de collagène peut être introduit dans un espace annulaire (11) entre la surface d'enveloppe extérieure (10) du tube à film (4) et la surface d'enveloppe intérieure (9) du tube à filet (8), de telle sorte que sur sa surface d'enveloppe extérieure (10), le tube à film (4) puisse être complètement enrobé par le film de collagène (24).

2. Dispositif d'enfilage de filet selon la revendication 1, sur lequel le tube à film (4) est fixement relié avec le moule positif (2), de préférence soudé sur celui-ci.

3. Dispositif d'enfilage de filet selon la revendication 1 ou la revendication 2, sur lequel l'embouchure à collagène (7) peut être assemblée au moule positif (2) de manière amovible, par exemple par des assemblages par vis sur une paroi extérieure (16) qui fait face au moule positif (2) et aussi bien sur sa paroi extérieure (16) faisant face au moule positif (2) qu'également sur sa paroi extérieure (14) opposée au moule (2) comporte un percement (17, 15) à travers lequel s'étend le tube à film (4).

4. Dispositif d'enfilage de filet selon l'une quelconque des revendications 1 à 3, sur lequel sur son ouverture d'entrée (12) proche du moule positif, qui fait face à l'embouchure de collagène (7), le tube à filet (8) comporte une bride de raccordement (20) qui peut se monter, de préférence se visser sur la paroi extérieure (14) éloignée du moule positif de l'embouchure à collagène (7).

5. Dispositif d'enfilage de filet selon l'une quelconque des revendications 1 à 4, sur lequel le dispositif de renvoi (25) comporte un galet de renvoi (26) qui est placé à proximité de la paroi extérieure (14) de l'embouchure à collagène (7) qui est opposée au moule positif (2) et des moyens de guidage (27), au moyen desquels le film de collagène (24) renvoyé par le galet de renvoi (26) peut se fixer sur la surface d'enveloppe extérieure (10) du tronçon du tube à film (4) s'étendant dans l'embouchure à collagène (7), de telle sorte que le film de collagène (24) enrobe la surface d'enveloppe extérieure (10) dudit tronçon du tube à film (4) et sur la paroi extérieure (14) opposée au moule positif (2) de l'embouchure à collagène (7), pénètre dans l'espace annulaire (11) entre la surface d'enveloppe extérieure (10) du tube à film (4) et la surface d'enveloppe intérieure (9) du tube à filet (8).
